Europäisches Patentamt

European Patent Office

Office européen des brevets

(11) Publication number: **0 187 679 B1**

# EUROPEAN PATENT SPECIFICATION

(45) Date of publication of patent specification: **27.12.91** (51) Int. Cl.5: **H04L 12/40**

(21) Application number: **86100298.8**

(22) Date of filing: **10.01.86**

(54) Data transmission terminal.

(30) Priority: **10.01.85 JP 3900/85**

(43) Date of publication of application:
**16.07.86 Bulletin 86/29**

(45) Publication of the grant of the patent:
**27.12.91 Bulletin 91/52**

(84) Designated Contracting States:
**DE FR GB IT**

(56) References cited:
**GB-A- 2 074 819**

(73) Proprietor: **SHARP KABUSHIKI KAISHA**
**22-22 Nagaike-cho Abeno-ku**
**Osaka 545(JP)**

(72) Inventor: **Machino, Katsuyuki**
**1400-150 Fusa**
**Abiko-shi Chiba-ken(JP)**
Inventor: **Ise, Masahiro**
**4-15-5 Fuseshinmachi**
**Kashiwa-shi Chiba-ken(JP)**
Inventor: **Iwano, Tsuneaki**
**Hamadayama 3-35-1-1205 Suginami-ku**
**Tokyo-to(JP)**

(74) Representative: **TER MEER - MÜLLER - STEIN-**
**MEISTER & PARTNER**
**Mauerkircherstrasse 45**
**W-8000 München 80(DE)**

## Description

The present invention relates to a data transmission terminal in a data transmission system comprising a bus-type network.

In a bus-type network using the CSMA/CD-system or a system as described in GB-A-2,074,819, each data transmission terminal is arranged to detect, for preventing data collision, whether a data transmission line is free or whether it is busy, and to start data transmission after a predetermined individual time period has elapsed since it detected that the transmission line is free, and to stop transmission, as soon as it detects that the data transmitted by itself have lower priority than the other data on the transmission line.

In the simple CSMA/CD-systems problems arise when a terminal of lower clock frequency wants to transmit data of higher priority than another terminal of higher clock frequency. This difference in clock frequencies has as a consequence that the terminal with the lower clock frequency already detects a busy line when it wants to start data transmission. As the line is busy, it cannot transmit its data of high priority, but has to wait till the other terminal with the higher clock frequency has finished its transmission of its data of lower priority.

To prevent this problem, the terminal according to GB-A-2,074,819 is additionally arranged to start data transmission as soon as the transmission line becomes busy after it was free before. In this case, the terminal with the slower clock frequency will start data transmission with only a short delay time against the start of data transmission by the terminal with higher clock frequency. Therefore, both terminals transmit data and the terminal with the higher clock frequency but the data of lower data priority can detect this lower priority. It then stops data transmission so that only the other terminal with the high priority data will transmit data.

In the CSMA/CD-system as well as in the system as disclosed in GB-A-2,074,819, data of high priority are characterized by low level signals.

The terminal according to GB-A-2,074,819 checks for data collision as soon as it is ensured that all terminals have determined that the line is free.

It is the object of the present invention to provide a data transmission terminal which checks for a free transmission line in a very effective manner.

The data transmission terminal of the present invention is arranged to
- detect whether a data transmission line is free or whether it is busy, thereby detecting for the busy line only after a predetermined time period $T_f$ has elapsed since the transmission line became free, said time period being shorter than the shortest of a plurality of individual terminal time periods $T_p$;
- start data transmission after its predetermined individual terminal time period $T_p$ has elapsed since it detected that the transmission line is free, or as soon as the transmission line becomes busy after it was free; and
- stop transmission as soon as it detects that the data transmitted by itself have lower priority than the other data on the transmission line.

This terminal distinguishes from the terminal of GB-A-2,074,819 in the fact that the terminal does not check for a busy line immediately starting with the time instant in which it is secured that all terminals have determined that the line is free, but it starts this detection only after a predetermined time period $T_f$ has elapsed since the just mentioned time instant. Therefore, the terminal of the present invention uses the fact that each terminal will only transmit data after a predetermined individual terminal time period $T_p$ has elapsed since it detected that the transmission line is free. During this time period it is of no use to detect whether the line is busy or not, as it is definitely known that it is free. As the data terminal does not check for a free line during the time period $T_f$, it is free for performing other tasks during this time period. Therefore, the terminal works more effective than previously known terminals.

The present invention will be better understood from the detailed description given hereinbelow and the accompanying drawings which are given by way of illustration only, and thus are not limitative of the present invention and wherein:

Fig. 1 is a timing chart showing an operational mode of an embodiment of a data transmission system of the present invention;

Fig. 2 is another timing chart showing another operational mode of an embodiment of the data transmission system of the present invention; and

Fig. 3 is a flow chart of a data transmitting routine conducted by the data transmission system of the present invention.

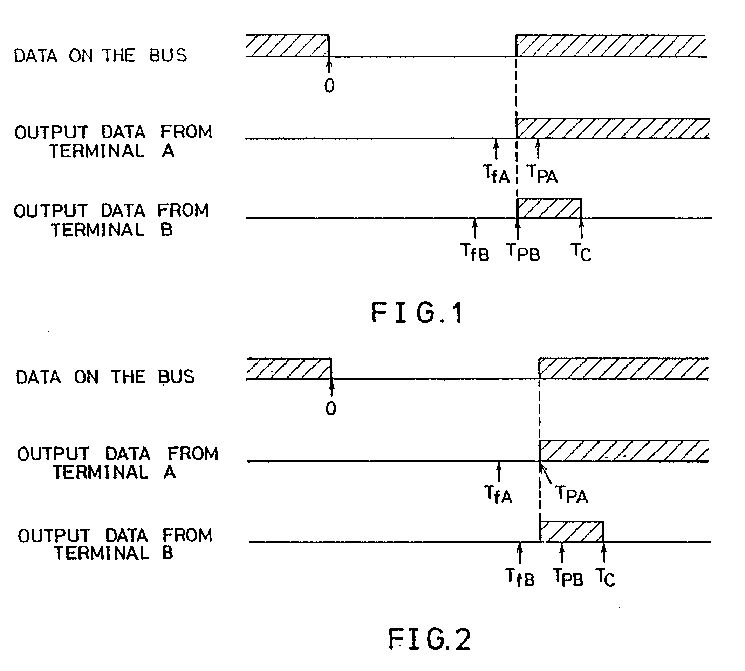

Fig. 1 is a timing chart showing an operational mode of the present invention. It is designed that terminals A and B start data transmission at the time $T_p$ after the bus line becomes empty. It is assumed that the data from the terminal A is given higher priority than that from the terminal B. The terminals A and B start their respective timers at the point 0 where the bus line becomes empty, and monitor the bus at least for the period between $T_f$ and $T_p$. If a terminal detects a signal on the bus line during this monitoring period, it starts data transmission promplty in synchronization with the signal. If the terminal detects no signal during this period, it starts data transmission at the point $T_p$.

In Fig. 1, the clock for the terminal A is slower than that for the terminal B. The terminal B starts its timer at the point 0 where the bus line becomes empty, and monitors the bus for the period between $T_{fB}$ and $T_{PB}$. Detecting no signal during this period, the terminal B starts data transmission at the point $T_{PB}$. Similarly, the terminal A monitors the bus for the period between $T_{fA}$ and $T_{PA}$. When it detects the signal output from the terminal B, it starts data transmission synchronously with the signal. Since the data from the terminal A is given higher priority than that from the terminal B, the terminal B detects collision at the point C and stops data transmission, so that only data from the terminal A survives. Thus, data from the terminal A with a slower clock can be transmitted prior to data from the terminal B with a faster clock.

Fig. 2 is a timing chart for the case where the clock of the terminal A is faster than that of the terminal B. Similar to the previous example, the terminal A monitors the bus for the period between $T_{fA}$ and $T_{PA}$. Since it detects no signal during this period, it starts data transmission at the point $T_{PA}$. Meanwhile, the terminal B detects the signal output from the terminal A during the period between $T_{fB}$ and $T_{PB}$ and promptly starts data transmission. However, the terminal B detects collision at the point $T_C$ and stops data transmission, so that no problem occurs.

Thus, according to the present invention, data with the higher priority from the terminal A always precedes data from the terminal B in data transmission operation under any condition. In any of these embodiments, it is necessary to set $T_f$ smaller than $T_p$ counted by the fastest clock in the system.

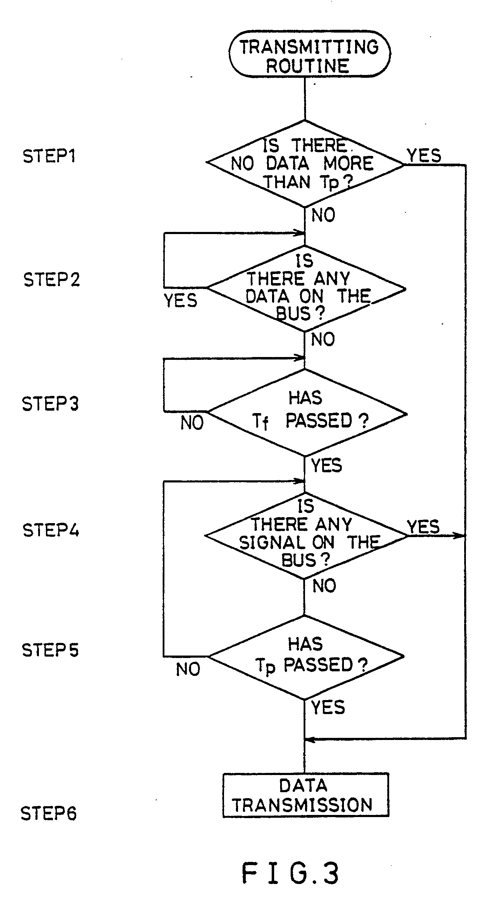

Fig. 3 is a flow chart showing a signal transmitting routine of the present invention. If there is no data detected on the bus through the period of $T_p$ or longer, a terminal can transmit data at any time (The routine skips form STEP 1 to STEP 6). If there is data on the bus, the terminal waits until the time $T_f$ elapses after the bus becomes empty. If there is no data on the bus and if the time $T_f$ has not elapsed, the terminal waits until the time $T_f$ elapses (STEP 2 and STEP 3). If a terminal detects a signal on the bus during the period between $T_f$ and $T_p$, it starts data transmission immediately (The routine skips from STEP 4 to STEP 6). If no signal is detected during this period, the terminal starts data transmission at the point $T_p$ (The routine proceeds from STEP 5 to STEP 6). The above-mentioned data transmission is conducted by this processing routine.

## Claims

1. Data transmission terminal (A, B) being arranged to
   - detect whether a data transmission line is free or whether it is busy;
   - start data transmission after a predetermined individual terminal time period $T_p$ has elapsed since it detected that the transmission line is free, or as soon as the transmission line becomes busy after it was free; and
   - stop transmission as soon as it detects that the data transmitted by itself have lower priority than the other data on the transmission line;

   **characterized in that** it is arranged to detect whether the transmission line is busy only after a predetermined time period $T_f$ has elapsed since the transmission line became free, said time period being shorter than the shortest individual terminal time period $T_p$ in a system of a plurality of terminals.

## Revendications

1. Terminal de transmission de données (A et B) agencé de manière à :
   - détecter si une ligne de transmission de données est libre ou si elle est occupée ;
   - commencer la transmission de données après qu'un laps de temps de terminal Tp individuel prédéterminé s'est écoulé depuis qu'il a détecté que la ligne de transmission est libre, ou dès que la ligne de transmission devient occupée après qu'elle était libre ; et
   - arrêter la transmission dès qu'il détecte que les données qu'il transmet ont une priorité inférieure à celle des autres données sur la ligne de transmission,

   caractérisé en ce qu'il est agencé de manière à ne détecter si la ligne est occupée qu'après qu'un laps de temps Tf prédéterminé s'est écoulé depuis que la ligne de transmission est devenue libre, ledit laps de temps étant plus court que le laps de temps de terminal Tp individuel le plus court dans un système d'une pluralité de terminaux.

## Patentansprüche

1. Datenübertragungsendgerät (A, B), welches
   - ermittelt, ob eine Datenübertragungsleitung frei oder belegt ist;
   - eine Datenübertragung beginnt, nachdem eine vorgegebene individuelle Endgerät-Zeitperiode $T_p$ seit dem Zeitpunkt ablief, zu dem festgestellt wird, daß die Übertragungsleitung frei ist, oder sobald die

Übertragungsleitung belegt wird, nachdem sie frei war; und

- die Übertragung beendet, sobald festgestellt wird, daß die übertragenen Daten
geringere Priorität aufweisen als andere
Daten auf der Übertragungsleitung;

**dadurch gekennzeichnet**, daß das Gerät erst
nach Ablauf einer vorgegebenen Zeitspanne $T_f$
nach dem Freiwerden der Übertragungsleitung
ermittelt, ob die Übertragungsleitung belegt ist,
welche Zeitspanne kürzer ist als die kürzeste
individuelle Endgerät-Zeitperiode $T_p$ in einem
System mit mehreren Endgeräten.

DATA ON THE BUS

0

OUTPUT DATA FROM
TERMINAL A

$T_{fA}$  $T_{PA}$

OUTPUT DATA FROM
TERMINAL B

$T_{fB}$  $T_{PB}$  $T_C$

FIG.1

DATA ON THE BUS

0

OUTPUT DATA FROM
TERMINAL A

$T_{fA}$  $T_{PA}$

OUTPUT DATA FROM
TERMINAL B

$T_{fB}$  $T_{PB}$  $T_C$

FIG.2

```
                    ┌─────────────┐
                    │ TRANSMITTING│
                    │   ROUTINE   │
                    └─────────────┘
                           │
                          ╱ ╲
STEP1              ╱  IS THERE.  ╲        YES
                 ╱   NO DATA MORE   ╲──────────┐
                 ╲      THAN Tp ?   ╱          │
                   ╲             ╱             │
                      ╲  NO  ╱                 │
            ┌──────────→│                      │
            │          ╱ ╲                     │
STEP2       │       ╱   IS    ╲                │
            │     ╱  THERE ANY   ╲             │
            │ YES╲  DATA ON THE  ╱             │
            │     ╲    BUS ?   ╱               │
            │        ╲  NO  ╱                  │
            │  ┌───────→│                      │
            │  │       ╱ ╲                     │
STEP3       │  │    ╱   HAS  ╲                 │
            │  │ NO╲ Tf PASSED?╱               │
            │  │    ╲       ╱                  │
            │  │      ╲ YES ╱                  │
            │  │  ┌──────→│                    │
            │  │  │      ╱ ╲                   │
STEP4       │  │  │   ╱   IS    ╲      YES      │
            │  │  │ ╱ THERE ANY   ╲────────────┤
            │  │  │ ╲SIGNAL ON THE╱            │
            │  │  │   ╲  BUS ? ╱               │
            │  │  │     ╲ NO ╱                 │
            │  │  │        │                   │
            │  │  │       ╱ ╲                  │
STEP5       │  │  │    ╱  HAS  ╲               │
            │  │  └─NO╲Tp PASSED?╱             │
            │  │       ╲      ╱                │
            │  │         ╲YES╱                 │
            │  │           │←──────────────────┘
            │  │    ┌──────────────┐
STEP6       │  │    │     DATA     │
                    │ TRANSMISSION │
                    └──────────────┘
```

# F I G.3